(19) Europäisches Patentamt
European Patent Office
Office européen des brevets

(11) EP 2 975 757 A1

(12) EUROPEAN PATENT APPLICATION

(43) Date of publication:
20.01.2016 Bulletin 2016/03

(51) Int Cl.:
H02M 7/5388 (2007.01)        H02J 1/10 (2006.01)
H02J 3/38 (2006.01)

(21) Application number: 14176886.1

(22) Date of filing: 14.07.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ABB Technology AG
8050 Zürich (CH)

(72) Inventors:
• Li, Rinver-TinHo
Diamond Hill (HK)

• Huusari, Juha
8003 Zürich (CH)
• Ho, Ngai-Man
6512 Giubiasco (CH)
• Bianda, Enea
5400 Baden (CH)

(74) Representative: ABB Patent Attorneys
C/o ABB Schweiz AG
Intellectual Property (CH-LC/IP)
Brown Boveri Strasse 6
5400 Baden (CH)

(54) **Three-phase transformerless DC to AC inverter**

(57)    A DC to AC inverter (100) for inverting a direct current of a multitude of DC power sources (10A, 10B) to a three-phase alternating current of a three-phase grid (20) is provided. The DC to AC inverter comprises an inverting unit (120) with a first sub-inverter (130) and a second sub-inverter (140), wherein each of the first and second sub-inverters (130, 140) is configured to be provided with a DC current via a primary side (119) of the inverting unit (120). The first sub-inverter (130) is configured to provide a first AC current to a first AC output phase (122A) of the three-phase grid (20). The second sub-inverter (140) is configured to provide a second AC current to a second AC output phase (122B) of the three-phase grid (20). The inverting unit (120) is configured such that a magnitude of the first AC current and a magnitude of the second AC current are substantially equal and shifted 120° to each other. The first sub-inverter (130) and the second sub-inverter (140) are connected such that a third AC current is provided to a third AC output phase (122C) of the three-phase grid as a negative sum of the first AC current and the second AC current.

Fig. 1

EP 2 975 757 A1

## Description

FIELD OF THE INVENTION

The invention relates to the field of power conversion. In particular, the invention relates to a three-phase DC to AC inverter for inverting a direct current of a multitude of DC power sources to a three-phase alternating current of a three-phase grid. In more particular, the invention relates to a three-phase transformerless DC to AC inverter for interconnecting renewable energy generators to a three-phase grid.

BACKGROUND OF THE INVENTION

Power inverters are used for interconnecting a first power network to a second power network and for inverting a voltage and/or current value of the first power network to a desired value of the second power network. Additionally, a frequency of the current may be inverted or converted. For example, a DC power provided by a photovoltaic power source is converted for feeding the power into a power grid, in particular a three-phase AC power grid.

Available solutions for this purpose can be mainly categorized into either modular or non-modular inverter systems. The modular approach is using more than one complete power conversion stages (namely module), to formulate a complete high power system. Each of the modules has the ability of power conversion and is able to work independently..

Advantages of a system with modular approach are higher flexibility and redundancy. For instance the number of modules under operation can be optimized or reduced based on the load conditions so as to achieve the maximum efficiency. The system is still working, with reduced power, if one of the modules fails. The key disadvantage of a system with modular approach may be higher cost. It is because a number of components, such as controller, semiconductors, magnetics, capacitors, relay, metal case, cables for interconnection and etc., are shareable or reducible.

The non-modular approach is using one or one set of power converter(s) / inverter(s) to formulate the complete system. There is no equivalent module connected in paralleled to increase the power rating and form a complete system. Power stage topology development is the key topic to advance the performance, including efficiency and functionality, and cost reduction for this approach.

Six-switch voltage source inverter (VSI) is a very traditional topology and broadly used technology due to the fact that the circuit topologies and the corresponding control method are simple, reasonable good in efficiency and cost, low technology risk and robust. It is well-suitable and popular for low voltage, below 1kV, applications in general because of the advancement and availability of the semiconductors. The disadvantage of these topologies may be relatively large inductor size and thus the weight of the system is relatively heavy. An example of such a switch is described in US 7,710,752 B2.

WO 2012/123559 A2 describes a three-phase inverter having two single-phase systems and a line frequency transformer.

J. Hahn, P. Enjeti, and I. Pitel, "A new three-phase power-factor correction (PFC) scheme using two single-phase PFC modules", IEEE Trans. On Industry Applications, Vol. 38, No. 1, Jan/Feb. 2002 describes a transformer for transforming three-phase AC to two-phase DC.

Further technologies of power inverters and related approaches are described in:

US 4,135,235;

A. Nabae, I. Takahashi and H. Akagi, "A New Neutral-Point-Clamped PWM Inverter" IEEE Trans. Industry Electron., vol. 17, no. 5, Sept./ Oct. 1981. pp. 518-523;

CN 101197547 B;

M. Schweizer and J. W. Kolar, "Design and Implementation of a High Efficient Three-Level T-type Converter for Low Voltage Applications", IEEE Trans. Power Electron., vol. 28, no.2, Feb. 2013, pp. 899-907;

CN 102882411 A;

J. Rodriguez, J. S. Lai and F. Z. Peng, "Multilevel Inverters: A Survey of Topologies, Controls and Applications", IEEE Trans. Industrial Electron., vol. 49, no.4, August. 2002, pp. 724-738;

Photon, PHOTON Publishing GmbH, Jülicher Str. 376, 52070 Aachen, Germany, December 2011, pp. 141 and 145; October 2012, pp. 176-181;

CN 102769401 A;

CN 102118035 A; and

US 8,218,344 B2.

Power balancing units are used for balancing intermittent DC power output provided by multiple DC power sources.

EP 1 047 179 6569934 A1 describes a system and a method for operating photovoltaic inverters in parallel via a switch arrangement. In the described system, the number or inverters in parallel depends on the actual power generated by a photovoltaic generator. If the generated power is low, the number of active inverters will be reduced.

Further power balancing approaches are described in US 6,800964 B2, US 8,334617 B2, US 2010/253151 A1, and WO 01/69769 A2.

DESCRIPTION OF THE INVENTION

It is an objective of the invention to provide a grid-connectable DC to AC inverter with filter inductors having reduced size and lower weight.

This objective is achieved by the subject-matter of the independent claim. Further exemplary embodiments are evident from the dependent claims and the following description.

According to a first aspect, a direct current (DC) to alternating current (AC) inverter for inverting a direct current of a multitude of DC power sources to a three-phase alternating current of a three-phase grid is provided. The DC to AC inverter comprises an inverting unit with a first sub-inverter and a second sub-inverter. Each of the first and second sub-inverters is configured to be provided with a DC current via a primary side of the inverting unit. The first sub-inverter is configured to provide a first AC current to a first AC output phase of the three-phase grid and the second sub-inverter is configured to provide a second AC current to a second AC output phase of the three-phase grid. The inverting unit is configured such that a magnitude of the first AC current and a magnitude of the second AC current are substantially equal and shifted 120° to each other. The first sub-inverter and the second sub-inverter are connected such that a third AC current is provided to a third AC output phase of the three-phase grid as a negative sum of the first AC current and the second AC current.

In particular, the first sub-inverter is configured to provide a first AC current to the first AC output phase and the negative value of the first AC current to a third AC output phase. The second sub-inverter is configured to provide the second AC current to the second AC output phase and the negative value of the second AC current to the third AC output phase. Thus, the third AC current results from the negative first and second AC currents and is a negative sum of these currents.

The inverter as described above and hereinafter is using two high performance sub-inverters to formulate a three-phase inverter which achieves small output filter inductors size, small grid side current ripple, low high frequency ground high frequency leakage, full active and reactive power deliver capability, low switching frequency and thus low switching loss. It is a cost effective and high performance dc/ac inverter circuit for grid connected applications such as, but not limited to, solar or photovoltaic DC power sources and Uninterrupted Power Supply (UPS) units.

A third order output filter structure can be obtained without adding additional grid side inductors. Therefore, a high output current quality can be achieved with reduced number of inductor. At the same time, the inverter as described above and hereinafter can also suppress the high frequency common mode (CM) current which may be a key issue in particular in solar inverter topology design.

Large magnetic components, such as a filter inductor of an inverter circuit, may impose a high weight to grid-connected power electronics inverters. It may be desirable to shrink the size and weight of filter inductors without degrading the performance such as efficiency, current quality, dynamic response, etc. This is obtained by an inverter composed of two high performance inverters using the concept of summation of three phases current equals to zero for inverter with three-phased connection. The basic idea is to configure the output filter structure actively via a capacitive element and a switching element to maximize the filter attenuation ability which results in low differential mode (DM) and common mode (CM) currents ripple and therefore can achieve the target of filter inductor size reduction. Additionally, switching loss may be reduced as the inverter is employing unipolar switching scheme and comparatively low switching frequency is allowed due to the strong filtering attenuation.

According to an embodiment of the invention, the primary side of the inverting unit is configured to be provided with a first DC power of a first power source and with a second DC power of a second power source.

Thus, the inverter enables inverting DC current of more than one DC power sources and feeding current of said multitude of DC power sources to the three-phase grid.

According to a further embodiment of the invention, the inverter further comprises a power balancing unit which is adapted to evenly distribute the power of the first power source and the second power source to the first sub-inverter and second sub-inverter.

Thus, the power fed into the three-phase grid is balanced. Balancing of power may in particular be necessary when a multitude of independent DC power sources provide intermittent power output, such as for example multiple photovoltaic power generators or other renewable energy DC power generators.

According to a further embodiment of the invention, the power balancing unit comprises a first stage power distribution unit and a second stage power distribution unit.

Thus, in the first stage, a rough power distribution is done and in the second stage, a fine balancing is performed. Carrying out the power distribution in two stages may in particular increase the accuracy of the power balancing and thus the efficiency of the inverter for feeding DC to AC converted power into a three-phase grid.

According to a further embodiment of the invention, the first stage power distribution unit is a switch arrangement that permits allocation of DC source power lines of the multitude of DC power sources to connection lines of the primary side of the inverter unit.

In this embodiment, the first stage power distribution unit may comprise a multiple input DC bus connections and multiple output DC bus connections. The first stage power distribution unit may comprise mechanical switches configured to enable arbitrary input to output connections such that any number of input DC busses can be connected to a certain output DC bus. The first stage power distribution unit may comprise means to provide zero-current operation of the mechanical switches, such as a device that diverts the current away from the mechanical switch during switch operation. The first stage power distribution unit may comprise protective means such that power cannot be transferred between input DC busses. This means can be a series diode, for example.

According to a further embodiment of the invention, the second stage power distribution unit is a bi-directional DC to DC converter which is connected to the primary side of the inverter unit such that a power distribution between the first sub-inverter and the second sub-inverter is enabled.

The bidirectional DC to DC converter may in particular be a dual active bridge and can be isolated in one embodiment. The DC to DC converter may be rated for power equaling half of the DC power source power. Typically, a DC power source which is a photovoltaic power source is rated for 5 kW, thus the DC to DC converter may be rated for 2,5 kW.

An inherent property of photovoltaic power systems is the intermittent nature of generated energy. As known from the fundamental photovoltaic cell properties (applicable directly to large photovoltaic installations as well), the power output of a photovoltaic generator is strongly affected by environmental conditions, mainly the ambient temperature and the incoming irradiation from the sun. At increasing temperatures the properties of the semiconductor junction within the photovoltaic cell causes the generated voltage to fall down, at a rate of -2.3 mV/°C/cell for silicon (Si) cells. Thus, the terminal voltage of a commercial photovoltaic module of 200 W, consisting usually of around 54 cells, will drop by 1.24 V for each increased temperature degree step. Respectively, the current output of the photovoltaic cell is almost a linear function of incoming irradiance. This means that the power output is highly varying e.g. because of clouds passing by or due to shadows cast by neighboring objects.

Because of this intermittency, a practical photovoltaic installation comprising multiple main power converters may operate frequently at unwanted power level, if parts of the installation are heavily shaded. To overcome this, it is desired to alter the configuration of the photovoltaic generators connected to each main power converter. Thus, main issues that need to be considered are how to realize such an altering functionality reliably, without excessive cost and also without increasing the energy loss of the system considerably. Furthermore, a solution that would meet all the aforementioned requirements and also would be able to accurately balance the powers fed into main power converters would be highly valuable.

An inverter with such a power balancing unit is in particular useful for feeding energy of renewable energy source to a three-phase grid. A typical renewable energy power system nowadays consists of multiple individual power sources (generators) that provide an output power which is dependent on the environmental conditions, such as the wind speed, illumination by the sun or ambient temperature. In a system with only one main power converter delivering the generated power to the load, all the power generators are connected to this converter, which then provides necessary functions to realize the power delivery and to control the power generators.

However, if the system comprises two or more main power converters, then usually the power generators are divided to different main power converters to provide e.g. redundancy against failures, to distribute control of the power generators or to simply meet the power requirements of the system by using multitude of main power converters. In this kind of an arrangement a problem may frequently arise that the power provided by the power generators varies unpredictably. Therefore, without proper actions, there might be severe imbalance in the power levels handled by the main power converters. This could lead e.g. to excessive system power loss as the main power converters are not operating at their optimum efficiency point or in case of three-phase grid-connected applications, the grid currents may become severely imbalanced.

The inverter described above and hereinafter may improve the performance by proposing a power balancing unit that consists of mechanical switches, a low-power auxiliary converter and corresponding operating sequence to realize accurate power balancing between main power converters. As such, the solution provides improved functionality of renewable energy power systems as well as enables new technological solutions to be utilized.

The benefits of such a power balancing unit can be summarized as follows: accurate power balancing of multiple main power converters, no interference with the operation of the main power converters, use of main power converters that require accurate input power balancing is enabled.

According to a further embodiment of the invention, the first sub-inverter comprises a first switching element and a first capacitive element in series for connecting the first AC output phase to the first DC power source.

The first switching element and the first capacitive element are configured to function as an active high order filter structure. Thus, a reduction of the inductance of the inverter inductors is enabled and the weight and costs of the inverter are reduced.

According to a further embodiment of the invention, the second sub-inverter comprises a second switching element and a second capacitive element in series for connecting the second AC output phase to the second DC power source.

According to a further embodiment of the invention, the third AC output phase is connected via a third switching element and a capacitive element to the first DC power source and via a switch and a capacitive element to the second DC power source.

Thus, in one embodiment each one of the output phases is connected to the first or second DC power source via a switching element and a capacitor.

According to a further embodiment of the invention, the first AC output phase and the third AC output phase are connected via a common return line to the first DC power source.

Thus, the number of connections lines can be reduced.

Similarly, the second AC output phase and the third AC output phase may be connected to the second DC power source via a second common return line.

According to a further embodiment of the invention, the return line is connected to either one of a first DC input line, a second DC input line, or a middle or neutral point of the first DC power source.

According to a further embodiment of the invention, the inverter further comprises a control unit which is adapted to control the inverting unit, wherein the control unit comprises a first control subunit which is configured to control the state of the first switching element and the third switching element based on a voltage value of the first AC output phase and the third AC output phase.

Alternatively, the first control subunit may be configured to control the state of the first switching element and the third switching element based on a current value or a power value of the first AC output phase and the third AC output phase.

According to a further embodiment of the invention, the first control subunit is configured to control the state of the first switching element and the third switching element such that a switching pattern of these switching elements is repeated periodically.

Thus, the inverter produces a periodic AC current.

According to a further embodiment of the invention, the first control subunit is configured to control the state of the first switching element and the third switching element such that at any given time t one of these switching elements is in a closed state and the other switching element is in an opened state.

In other words, at any given time t, either the first switching element or the third switching element is closed and the other one is opened at the same time t.

The second control subunit is configured similarly to the first control subunit such that the details provided with reference to the first control subunit similarly apply to the second control subunit.

Summing up, the key focuses of grid-connected inverters are low cost and high efficiency. Furthermore, light weight is highly recommended, for example for solar inverters. The DC to AC inverter as described above and hereinafter enables a reduced output filter inductor size and lower switching loss, avoids low frequency (i.e. grid frequency and its harmonics), and suppressed high frequency (i.e. switching frequency and its harmonics) leakage currents, and may lead to lower costs and lighter weight of the inverter due to the shrink in filter inductors.

A DC to AC inverter may have a maximum power point tracking (MPPT) feature, which is a functional block in the control system that outputs a reference value for the input voltage control loop of the inverter. In other words, the MPPT block enables maximum power yield of the DC power source or DC power generator by guiding the inverter accordingly. The MPPT block can be realized in a number of different ways with different algorithms and nearly every algorithm is based on measurement of the DC power (i.e., voltage and current). These measurements are typically taken at given intervals, so that the actual output power of the DC power generator at consecutive time instances can be compared. This allows monitoring the change in the DC power according to which the DC voltage can be adjusted. In one embodiment, the control system essentially comprises two different control loops: the input voltage loop and the grid current control loop. The MPPT block itself can be seen as a control loop, but is it usually designed to act very slowly and thus it essentially provides constant voltage reference with respect to input voltage control loop. The control loop is designed to enable stable operation throughout the DC power source characteristic operating curve as well as to enable stable power injection despite changes in grid side electrical parameters. The inner control loop that is responsible for the current control may be designed with high bandwidth and the outer control loop, regulating the input voltage, with a low bandwidth. The MPPT block yields the reference value for the input voltage and an input voltage controller $G_v$ outputs the peak value for the grid current. As this peak value is essentially a dc value, it is multiplied with the sensed grid voltage $u_{ac}$ to obtain sinusoidal current reference. This multiplication actually provides simultaneously synchronisation with the grid and, therefore, if reactive power needs to be delivered, a phase change has to be introduced at the multiplication point. The resulting sinusoidal reference current is compared with the sensed grid current $i_{ac}$ after which a current controller $G_i$ outputs a corresponding control signal that is used to generate PWM gate signals for the inverter switches.

Preferably, the functional modules such as the control unit with its control subunits and/or the configuration mechanisms are implemented as programmed software modules or procedures, respectively; however, one skilled in the art will understand that these functional modules and/or the configuration mechanisms can be implemented fully or partially in hardware.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows an inverter according to an exemplary embodiment of the invention.

Fig. 2 schematically shows an inverter according to a further exemplary embodiment of the invention.

Fig.3 schematically shows an inverter according to a further exemplary embodiment of the invention.

Fig. 4 schematically shows an inverter according to a further exemplary embodiment of the invention.

Fig. 5 schematically shows a switching scheme of an inverter according to a further exemplary embodiment of the invention.

Fig. 6 schematically shows a control unit of an inverter according to a further exemplary embodiment of the invention.

Fig. 7 schematically shows an inverter according to a further exemplary embodiment of the invention.

Fig. 8 schematically shows an inverter according to a further exemplary embodiment of the invention.

The reference symbols used in the drawings, and their meanings, are listed in summary form in the list of reference symbols. In principle, identical or similar elements are provided with the same reference symbols in the figures.

DETAILED DESCRIPTION OF EXEMPLARY EMBODIMENTS

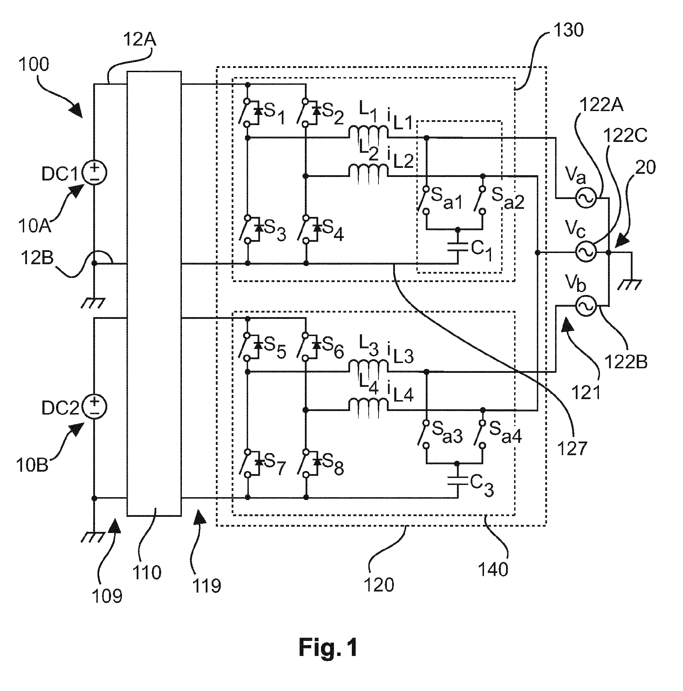

Fig. 1 shows a DC to AC inverter 100 comprising a power balancing unit 110 and an inverting unit 120.

The power balancing unit is connected to a first DC power source 10A and a second DC power source 10B via first and second DC power input lines 12A, 12B, respectively. Optionally, the DC power sources 10A, 10B are connected to ground, for security reasons, for example.

The power balancing unit 110 is connected to a primary side 119 of the inverting unit 120 such that the DC power can be provided to the inverting unit 120.

The inverting unit 120 comprises a first sub-inverter 130 and a second sub-inverter 140 each of which comprises a filter component for connecting the respective AC output phases to the DC power sources.

The inverting unit 120 feeds AC current via the first AC output phase 122A (Va), second AC output phase 122B (Vb), and third AC output phase 122C (Vc) to a three-phase grid. The three-phase grid is connected to a secondary side 121 of the inverting unit 120.

The first sub-inverter 130 is configured to provide the first AC current to the first AC output phase 122A and the negative value of the first AC current to the third AC output phase 122C. Both, the first and third AC output phases are connected via a switch (Sa1, Sa2) and a capacitor (C1) to the return line 127 which is connected to the DC input line 12B (DC minus) of the first DC power source 10A.

The second sub-inverter 140 is configured to provide the second AC current to the second AC output phase 122B and the negative value of the second AC current to the third AC output phase 122C. Both, the second and third AC output phases are connected via a switch (Sa3, Sa4) and a capacitor (C3) to a return line which is connected to a DC input line (DC minus) of the second DC power source 10B.

One aspect of the three-phase inverter 100 is using an inverting unit 120 with two sub-inverters 130, 140, namely first sub-inverter 130 and second sub-inverter 140, together with an active high order filter structure Each sub-inverter consists of four high frequency main switches, S1 to S4 for the first sub-inverter 130 and S5 to S8 for the second sub-inverter 140, and four low frequency bidirectional blocking switching elements, Sa1 and Sa2 for the first sub-inverter 130 and Sa3 and Sa4 for the second sub-inverter 140. A capacitor, C1 for the first sub-inverter and C2 for the second sub-inverter, is connected to each set of bidirectional blocking switches to create the active high order filtering ability.

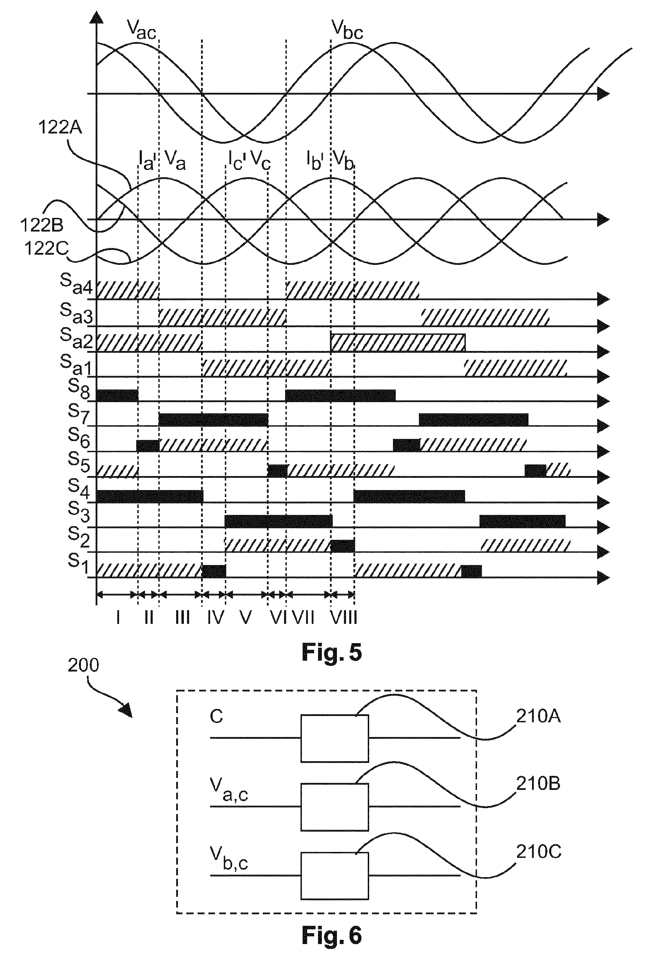

One example of a switching scheme of each switching element is shown in Fig. 5.

A sources power sharing circuit, namely the power balancing unit 110, is connected between the two sub-inverters 130, 140 and the DC power sources 10A, 10B. It is used to ensure the power to input the two sub-inverters is even regardless the amount of the power of the sources. Since the source power could be different due to, for instance, partial sharing of the panels in solar application. Due to the assist of the power sharing circuit, power to both sub-inverters are fairly equal. Finally, the line frequency component of phase c current equals to the negative sum of them Therefore, if phase a 122A and phase b 122B currents are equal in magnitude and properly shifted, that is 120° with regard to each other, a current with the same magnitude and 120° shifted abstractly respect to phase a and b will be induced on phase c naturally. With the same argument, if there is a phase shift, $\alpha$ degree, on phase a and b currents, phase c current will shift accordingly. As a result, phase c current can be expressed as follow:

$$i_c = -\left(i_a \angle \alpha + i_b \angle (\alpha + 120°)\right)$$

The proposed inverter is formulated by two sub-inverters and each sub-inverter is shaping the current to one line-line voltage. Therefore, the proposed DC to AC inverter has the ability of full reactive power delivery and the relationship of the three-phase current.

In case that the DC power sources 10A and 10B cannot provide balanced power, the current in phase c will be shifted. For instance, power from DC 1 is larger than DC2 and thus current, as well as power, on phase a is higher than phase b, as phase c current is the negative sum of phases a and b. Therefore, phase c current will be shifted and reactive power will be generated under undesired situation. The problem can be solved by the power balancing unit 110. The power balancing unit will redirect path of the power from DC power source 10A to the second sub-inverter until power input both sub-inverters are the same. Once the input power to the sub-inverters are balanced, current on phase a and b will be equalled. The induced phase c current will move back to the correct phase angle (-120°) and magnitude (equals to phase a and b) consequently.

The DC to AC inverter is going to maximize the filter attenuation ability, therefore the required inductance and thus the size and cost, can be reduced.

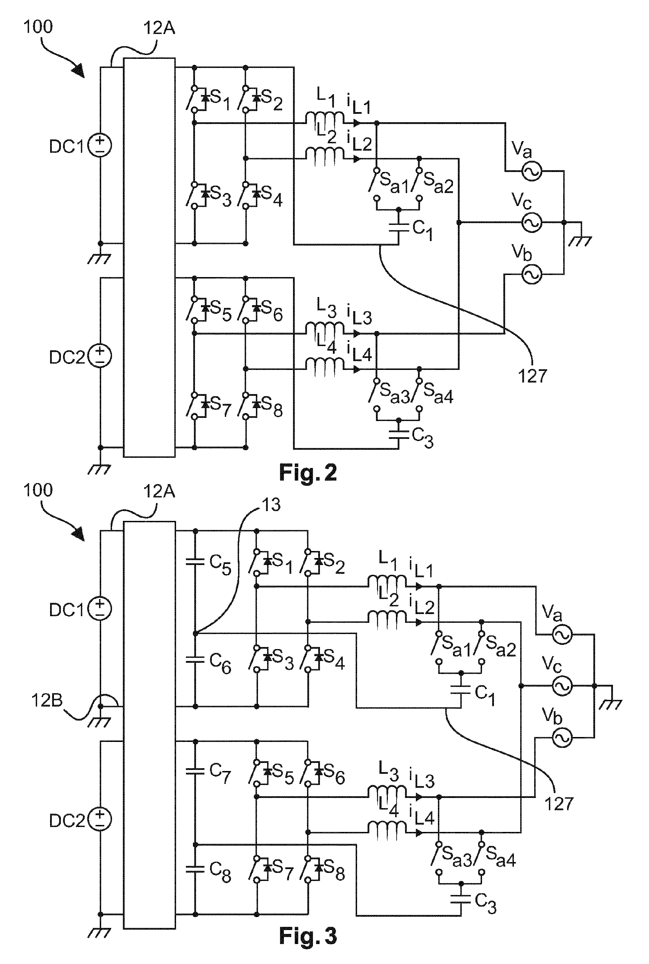

Fig. 2 shows a DC to AC inverter 100 wherein the AC output phases Va and Vc of the first sub-inverter are connected via a switching element Sa1, Sa2 and a capacitor C1 to the DC input line 12A (DC plus) of the DC power source 10A via the return line 127. A similar structure applies to the second sub-inverter and the AC output phases Vb and Vc which are also connected to DC plus of the second DC power source 10B.

Fig. 3 shows an alternative embodiment of the DC to AC inverter 100 wherein the return lines 127 of the AC output phases are connected to the neutral or middle point 13 of a DC power source.

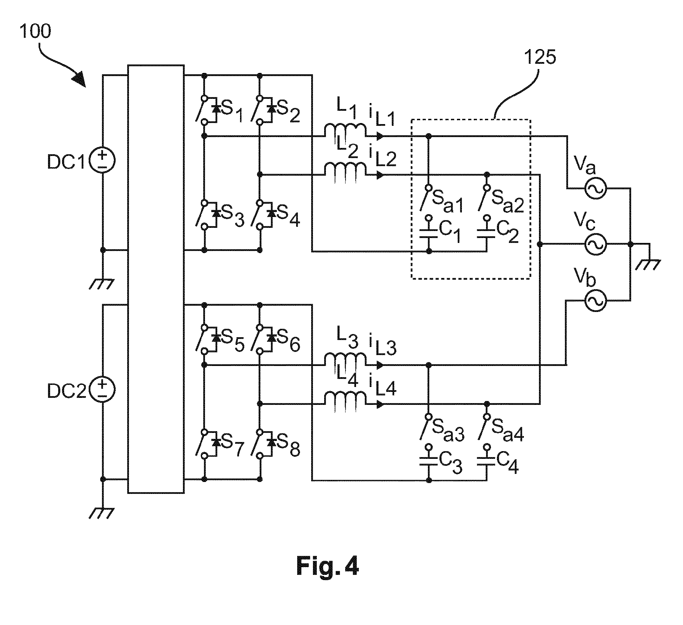

Fig. 4 illustrates that each one of the AC output phases can be connected via an individual capacitor to the return line 127. In the first sub-inverter, the first AC output phase Va is connected to the return line via switching element Sa1 and capacitor C1, whereas the third AC output phase Vc is connected to the return line via switching element Sa2 and capacitor C2. In the second sub-inverter, the second AC output phase Vb is connected to the return line via switching element Sa3 and capacitor C3, whereas the third AC output phase Vc is connected to the return line via switching element Sa4 and capacitor C4.

The parameters of the used elements may be the following in one exemplary embodiment: L1=L2=L3=L4 = 850 μH, C1=C2=C3=C4 = 4 μF.

Fig. 5 shows an exemplary switching scheme of each switching element of the inverter. Only two of the auxiliary switches Sa1, Sa2 of the first sub-inverter and Sa3, Sa4 of the second sub-inverter are switching at high frequency at any time and therefore the switching loss is reduced comparing to the typical inverter with all the switches are switching at high frequency. When considering the auxiliary switches of one sub-inverter only (switches Sa1, Sa2 of the first sub-inverter or switches Sa3, Sa4 of the second sub-inverter) only one of the respective auxiliary switches is in a closed state at any given time t whereas the other one is in an opened state.

The switching scheme of the switches Sa1, Sa2 of the first sub-inverter and Sa3, Sa4 of the second sub-inverter may be identical but displaced or shifted about a predefined angle of the AC current signals.

The black rectangle represents gate signal with Pulse Width Modulation (PWM) and the hatched rectangle represents constant high gate signal. The switches S1 to S8 represent an exemplary switching scheme of the main switches of an inverter.

The top window of Fig. 5 shows the output voltage of the first sub-inverter, Vac, and the second sub-inverter, Vbc. It has to be noticed that the phase relationship between the output voltage and the output current of the two inverter are not the same. This causes the switching pattern of the two inverters are shifted and not exactly the same. The first sub-inverter is responsible to shape and control phase a 122A current while the second sub-inverter is responsible to shape and control the phase b 122B current. The positive half line cycle of the first sub-inverter corresponds to region I to III shown in Fig. 5. If S1 and S4 are closed, this corresponds to an energy transfer mode, the output inductor currents, iL1 and iL2, are increasing. If S1 is still closed and S4 is opened, this corresponds to the freewheeling mode. The output inductor current is reducing. iL1 can thus be controlled accordingly by using these two operating modes during region I to III. The operation of the rest regions as well as for the second sub-inverter is similar.

Fig. 6 illustrates a control unit 200 comprising a first control subunit 210A, a second control subunit 210B, and a third control subunit 210C.

The first control subunit 210A is configured for controlling the switching status of the main switches S1 to S8 of the inverting unit 120 based on a control signal c. The second control subunit 210B is configured for controlling the switching status of the auxiliary switches Sa1, Sa2 of the first sub-inverter based on the voltage values of the first and third AC output phases. The third control subunit 210C is configured for controlling the switching status of the auxiliary switches Sa3, Sa4 of the second sub-inverter based on the voltage values of the second and third AC output phases.

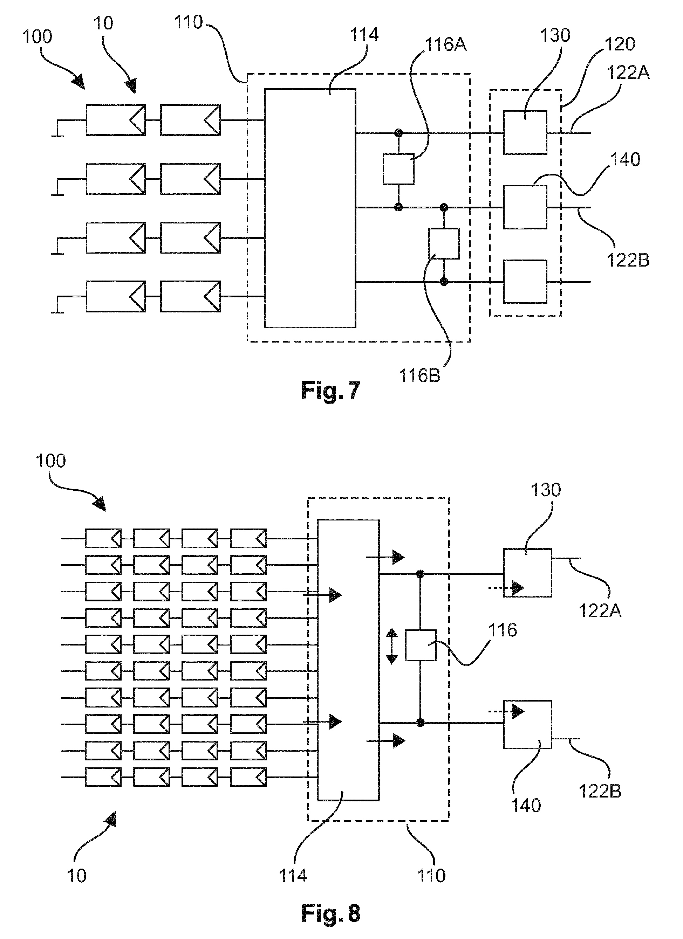

Fig. 7 illustrates a DC to AC inverter 100 connected to a multitude of DC power sources 10. A power balancing unit 110 with a first stage power distribution unit 114 and two second stage power distribution units 116A, 116B is adapted to provide DC power from the DC power sources 10 to an inverting unit 120 consisting of sub-inverters 130, 140.

As illustrated in Figs. 7 and 8, the inverting unit 120 may comprise two or more than two sub-inverters.

Fig. 7 shows DC power sources 10, for example photovoltaic power sources, which are connected to the first stage power distribution unit 114 via an input DC bus. The first stage power distribution unit 114 has multiple input DC bus connections and multiple output DC bus connections and contains mechanical switches in an arrangement that enables arbitrary input/output connections. That is, any given number of input DC busses can be connected to a certain output DC bus. The first stage power distribution unit 114 May contain means to provide zero-current operation of the mechanical switches, such as a device that diverts the current away from the mechanical switch during switch operation. The first stage power distribution unit 114 may contain protective method such that power cannot be transferred between input DC busses. This method can be a series diode, or any other suitable solution.

The second stage power distribution units 116A, 116B are bi-directional DC to DC converter, such as a dual active bridge and can be isolated. The units 116A, 116B may be rated for power equaling half of the photovoltaic power source power 10. Typically, a photovoltaic string is rated for 5 kW, thus, the first stage power distribution unit 114 is rated at most for 2.5 kW.

The inverting unit 120 with the sub-inverters 130, 140 transfers the input power into load bus or grid. These units can be DC to DC converter or DC to AC converter, depending on the bus type. A control unit may be provided that takes the operation of the first stage power distribution unit 114 into account, i.e., without disturbances in the operation. This control unit may be integrated into each sub-inverter 130, 140 or to an external master control unit (not shown).

The operation of the inverter shown in Fig. 8 is explained with the following example, discussing a system of 10 individual photovoltaic (PV) strings collected under two segments A (first DC power source) and B (second DC power source), a first stage power distribution unit, two sub-inverters (130 and 140) and a power balancing unit 110.

In case a shading object emerges and shades firstly the segment B, due to shading the total available power from both segments experience a momentarily drop, which finally is removed.

If the power generated by strings in segment B drops, so does the input power of the sub-inverter 140. When the difference of the input powers of the sub-inverters reach a predefined value (here set to 5 kW, nominal power of one string), the first stage power distribution unit performs re-arrangement of power. In this re-arrangement, one string from segment A, delivering power to sub-inverter 130 is disconnected and re-connected to supply sub-inverter B. Similar re-arrangement is performed whenever the power difference exceeds the threshold.

Before the first stage power distribution unit performs the re-arrangement, if there is predefined amount of difference in the input powers, the second stage power distribution unit operates and balances the powers of the sub-inverters. It can be concluded that this kind of power balancing can be performed with relatively high efficiency, as the rough power balancing is done by mechanical switches operating in the first stage power distribution unit and only a fraction of the PV system power is handled by the second stage power distribution unit. Furthermore, the balancing is only needed if there is high enough mismatch in the input powers of the sub-inverters. This typically occurs only momentarily due to passing clouds etc. and thus, the total loss in the energy yield remains low.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| 10A/10B | DC power source |
| 12A/12B | first/second DC power input line |
| 13 | middle point of the DC power source |
| 20 | three phase grid |
| 100 | DC to AC inverter |
| 109 | primary side of power balancing unit |
| 110 | power balancing unit |
| 114 | first stage power distribution unit |
| 116A/116B | first/second second stage power distribution unit |
| 119 | primary side of inverting unit |
| 120 | inverting unit |
| 121 | secondary side of inverting unit |
| 122A/122B/122C | secondary side phase outputs |
| 125 | filter component |
| 127 | return line |
| 130 | first sub-inverter |
| 140 | second sub-inverter |
| 200 | control unit |
| 210A/210B/210C | first/second/third control subunit |

**Claims**

1. A direct current, DC, to alternating current, AC, inverter (100) for inverting a direct current of a multitude of DC power sources (10A, 10B) to a three-phase alternating current of a three-phase grid (20), comprising:

    an inverting unit (120) with a first sub-inverter (130) and a second sub-inverter (140);
    wherein each of the first and second sub-inverters (130, 140) is configured to be provided with a DC current via a primary side (119) of the inverting unit (120);
    wherein the first sub-inverter (130) is configured to provide a first AC current to a first AC output phase (122A) of the three-phase grid (20);
    wherein the second sub-inverter (140) is configured to provide a second AC current to a second AC output phase (122B) of the three-phase grid (20);
    wherein the inverting unit (120) is configured such that a magnitude of the first AC current and a magnitude of the second AC current are substantially equal and shifted 120° to each other; and
    wherein the first sub-inverter (130) and the second sub-inverter (140) are connected such that a third AC current is provided to a third AC output phase (122C) of the three-phase grid as a negative sum of the first AC current and the second AC current.

2. The inverter (100) according to claim 1, wherein the primary side (119) of the inverting unit is configured to be provided with a first DC power of a first power source (10A) and with a second DC power of a second power source (10B).

3. The inverter (100) according to claim 2, further comprising a power balancing unit (110) which is adapted to evenly distribute the power of the first power source (10A) and the second power source (10B) to the first sub-inverter (130) and second sub-inverter (140).

4. The inverter (100) according to claim 3, wherein the power balancing unit (110) comprises a first stage power distribution unit (114) and a second stage power distribution unit (116A, 116B).

5. The inverter (100) according to claim 4, wherein the first stage power distribution unit (114) is a switch arrangement that permits allocation of DC source power lines of the multitude of DC power sources (10A, 10B) to connection lines of the primary side (119) of the inverter unit (120).

6. The inverter (100) according to claim 4 or 5, wherein the second stage power distribution unit (116A, 116B) is a bi-directional DC to DC converter which is connected to the primary side of the inverter unit (120) such that a power distribution between the first sub-inverter (130) and the second sub-inverter (140) is enabled.

7. The inverter (100) according to one of claims 2 to 6, wherein the first sub-inverter (130) comprises a first switching element (Sa1) and a first capacitive element (C1) in series for connecting the first AC output phase (122A) to the first DC power source (10A).

8. The inverter (100) according to one of claims 2 to 7, wherein the second sub-inverter (140) comprises a second switching element (Sa3) and a second capacitive element (C2) in series for connecting the second AC output phase (122B) to the second DC power source (10B).

9. The inverter (100) according to one of the claims 2 to 8, wherein the third AC output phase (122C) is connected via a third switching element (Sa2) and a capacitive element (C1, C2) to the first DC power source (10A) and via a switch (Sa4) and a capacitive element (C3, C4) to the second DC power source (10B).

10. The inverter (100) according to claim 9, wherein the first AC output phase (122A) and the third AC output phase (122C) are connected via a common return line (127) to the first DC power source (10A).

11. The inverter (100) according to claim 10, wherein the return line (127) is connected to either one of a first DC input line (12A), a second DC input line (12B), or a middle point (13) of the first DC power source (10A).

12. The inverter (100) according to claims 9 to 11, further comprising a control unit (200) which is adapted to control the inverting unit (120), wherein the control unit (200) comprises a first control subunit (210B) which is configured to control the state of the first switching element (Sa1) and the third switching element (Sa2) based on a voltage value of the first AC output phase (122A) and the third AC output phase (122C).

13. The inverter (100) according to claim 12, wherein the first control subunit (210B) is configured to control the state of the first switching element (Sa1) and the third switching element (Sa2) such that a switching pattern of these switching elements is repeated periodically.

**14.** The inverter (100) according to claim 12 or 13, wherein the first control subunit (210B) is configured to control the state of the first switching element (Sa1) and the third switching element (Sa2) such that at any given time t one of these switching elements is in a closed state and the other switching element is in an opened state.

**Fig. 1**

**Fig. 2**

**Fig. 3**

**Fig. 4**

**Fig. 5**

**Fig. 6**

**Fig. 7**

**Fig. 8**

## EUROPEAN SEARCH REPORT

Application Number

EP 14 17 6886

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 308780 A (TOSHIBA CORP; TOSHIBA ENGINEERING CO) 19 November 1993 (1993-11-19) | 1-5 | INV. H02M7/5388 H02J1/10 |
| Y | * abstract; figures 1,3,5 * | 7-9, 12-14 | |
| A | | 6 | ADD. H02J3/38 |
| X | US 2011/080147 A1 (SCHOENLINNER MARKUS [DE] ET AL) 7 April 2011 (2011-04-07) | 1-5 | |
| A | * figures 1, 3 * * paragraphs [0042], [0044] * | 6 | |
| A | US 2013/289783 A1 (HAUF HARALD [FR] ET AL) 31 October 2013 (2013-10-31) * figures 10,11 * * paragraphs [0124], [0127], [0130], [0131], [0136] * | 5 | |
| A | US 2011/241431 A1 (CHEN DAOSHEN [US] ET AL) 6 October 2011 (2011-10-06) * figure 8 * * paragraphs [0010], [0054], [0058], [0097] - [0099], [0106] * | 5 | |
| X | JULIAN A L ET AL: "Active filtering for common mode conducted EMI reduction in voltage source inverters", APPLIED POWER ELECTRONICS CONFERENCE AND EXPOSITION, 1998. APEC '98. C ONFERENCE PROCEEDINGS 1998., THIRTEENTH ANNUAL ANAHEIM, CA, USA 15-19 FEB. 1998, NEW YORK, NY, USA,IEEE, US, vol. 2, 15 February 1998 (1998-02-15), pages 934-939, XP010263704, DOI: 10.1109/APEC.1998.654010 ISBN: 978-0-7803-4340-5 | 1,2,7,8 | TECHNICAL FIELDS SEARCHED (IPC) H02J H02M |
| Y | * figure 1 * | 9-14 | |

-/--

The present search report has been drawn up for all claims

| Place of search | Date of completion of the search | Examiner |
|---|---|---|
| The Hague | 19 February 2015 | Kail, Maximilian |

Europäisches
Patentamt

European
Patent Office

Office européen
des brevets

## EUROPEAN SEARCH REPORT

Application Number

EP 14 17 6886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 103 36 287 A1 (SIEMENS AG [DE]) 10 March 2005 (2005-03-10) * figures 1-4 * * paragraphs [0022], [0027], [0029] * ----- | 1,2,7-9, 12-14 | |
| Y | JP 2007 202358 A (MATSUSHITA ELECTRIC IND CO LTD) 9 August 2007 (2007-08-09) * abstract; figures 1-14 * ----- | 1,2,7-11 | |

TECHNICAL FIELDS
SEARCHED (IPC)

The present search report has been drawn up for all claims

| Place of search | Date of completion of the search | Examiner |
|---|---|---|
| The Hague | 19 February 2015 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

Application Number

EP 14 17 6886

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

18

Europäisches Patentamt

European Patent Office

Office européen des brevets

**LACK OF UNITY OF INVENTION
SHEET B**

The Search Division considers that the present European patent application does not comply with the requirements of unity of invention and relates to several inventions or groups of inventions, namely:

```
1. claims: 1-6

      Three-phase PV inverter built from sub modules

1.1. claims: 3-6

      dc side power balancing
                    ---

2. claims: 7-14

      active LC line filter
                    ---

Please note that all inventions mentioned under item 1, although not
necessarily linked by a common inventive concept, could be searched
without effort justifying an additional fee.
```

**ANNEX TO THE EUROPEAN SEARCH REPORT
ON EUROPEAN PATENT APPLICATION NO.**

EP 14 17 6886

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2015

| Patent document cited in search report | Publication date | Patent family member(s) | Publication date |
|---|---|---|---|
| JP H05308780 A | 19-11-1993 | NONE | |
| US 2011080147 A1 | 07-04-2011 | CN 102035418 A | 27-04-2011 |
| | | DE 102009047936 A1 | 07-04-2011 |
| | | EP 2325993 A2 | 25-05-2011 |
| | | JP 2011078306 A | 14-04-2011 |
| | | US 2011080147 A1 | 07-04-2011 |
| US 2013289783 A1 | 31-10-2013 | AT 544222 T | 15-02-2012 |
| | | EP 2208276 A1 | 21-07-2010 |
| | | ES 2381906 T3 | 01-06-2012 |
| | | FR 2923653 A1 | 15-05-2009 |
| | | US 2010250018 A1 | 30-09-2010 |
| | | US 2013289783 A1 | 31-10-2013 |
| | | WO 2009060273 A1 | 14-05-2009 |
| US 2011241431 A1 | 06-10-2011 | CN 101800498 A | 11-08-2010 |
| | | EP 2372487 A2 | 05-10-2011 |
| | | US 2011241431 A1 | 06-10-2011 |
| | | WO 2011120311 A1 | 06-10-2011 |
| DE 10336287 A1 | 10-03-2005 | NONE | |
| JP 2007202358 A | 09-08-2007 | JP 5044939 B2 | 10-10-2012 |
| | | JP 2007202358 A | 09-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7710752 B2
- WO 2012123559 A2
- US 4135235 A
- CN 101197547 B
- CN 102882411 A
- CN 102769401 A
- CN 102118035 A

- US 8218344 B2
- EP 10471796569934 A1
- US 6800964 B2
- US 8334617 B2
- US 2010253151 A1
- WO 0169769 A2

**Non-patent literature cited in the description**

- **J. HAHN ; P. ENJETI ; I. PITEL.** A new three-phase power-factor correction (PFC) scheme using two single-phase PFC modules. *IEEE Trans. On Industry Applications,* January 2002, vol. 38 (1
- **A. NABAE ; I. TAKAHASHI ; H. AKAGI.** A New Neutral-Point-Clamped PWM Inverter. *IEEE Trans. Industry Electron.,* September 1981, vol. 17 (5), 518-523

- **M. SCHWEIZER ; J. W. KOLAR.** Design and Implementation of a High Efficient Three-Level T-type Converter for Low Voltage Applications. *IEEE Trans. Power Electron.,* February 2013, vol. 28 (2), 899-907
- **J. RODRIGUEZ ; J. S. LAI ; F. Z. PENG.** Multilevel Inverters: A Survey of Topologies, Controls and Applications. *IEEE Trans. Industrial Electron.,* August 2002, vol. 49 (4), 724-738